# EUROPEAN PATENT SPECIFICATION

(11) **EP 4 269 511 B1**
(45) Date of publication and mention of the grant of the patent: **09.12.2026**
(21) Application number: 23170207.7
(22) Date of filing: 26.04.2023
(51) Int. Cl.: C09D 11/101, C09D 11/322, C09D 11/38

(54) **RADIATION CURABLE INK JET INK**
STRAHLUNGSHÄRTBARE TINTENSTRAHLTINTE
ENCRE POUR JET D'ENCRE DURCISSABLE PAR RAYONNEMENT

(30) Priority: 28.04.2022 JP 2022074405
(43) Date of publication of application: 01.11.2023
(73) Proprietor: Seiko Epson Corporation, Tokyo 160-8801 (JP)
(72) Inventor: SAITO, Toru, Suwa-shi, 392-8502 (JP); NAKAMURA, Kiyoshi, Suwa-shi, 392-8502 (JP); YOSHIDA, Yoshinobu, Suwa-shi, 392-8502 (JP); YODA, Toshiyuki, Suwa-shi, 392-8502 (JP)
(74) Representative: Lewis Silkin LLP

(56) References cited:
- WO-A1-2022/225041
- CN-A- 114 276 716
- JP-A- 2019 196 461
- JP-B1- 7 054 753
- US-A1- 2008 213 518
- US-A1- 2021 139 616

## Description

The present application is based on, and claims priority from JP Application Serial Number 2022-074405, filed April 28, 2022

### BACKGROUND

### 1. Technical Field

The present disclosure relates to a radiation curable ink jet composition.

### 2. Related Art

Since being able to record a highly fine image by a relatively simple apparatus, an ink jet recording method has been rapidly developed in various fields. Among recent developments, various studies have been carried out, for example, on an abrasion resistance of a coating film of an ink jet composition which is cured when being irradiated with radioactive rays. For example, JP-A-2012-207084 has disclosed an ultraviolet ray curable ink jet composition containing dipropylene glycol diacrylate or the like as a polyfunctional polymerizable compound. Additionally, JP 2019196461 might be cited as prior art.

However, although the abrasion resistance of the coating film is likely to be obtained from a polyfunctional polymerizable compound, the viscosity thereof is high, and when a large amount of the polymerizable compound is contained, the viscosity of the ink composition is increased, and hence, an ejection stability thereof tends to be degraded. That is, a radiation curable ink jet composition which suppresses a viscosity increase thereof and which is excellent in abrasion resistance has been desired.

### SUMMARY

According to one aspect of the present disclosure, there is provided a radiation curable ink jet composition as set out in the appended set of claims.

### DESCRIPTION OF EXEMPLARY EMBODIMENTS

Hereinafter, embodiments of the present disclosure will be described. The following embodiments are described to explain examples of the present disclosure. The present disclosure is not limited at all to the following embodiments and also includes various types of modified embodiments to be performed without departing from the scope of the present disclosure. In addition, the following constituents described below are not always required to be essential constituents of the present disclosure.

In addition, in this specification, "(meth)acryloyl" indicates at least one selected from the group consisting of an acryloyl and a methacryloyl corresponding thereto, "(meth)acrylate" indicates at least one selected from the group consisting of an acrylate and a methacrylate corresponding thereto, and "(meth)acryl" indicates at least one selected from the group consisting of an acryl and a methacryl corresponding thereto.

### 1. RADIATION CURABLE INK JET COMPOSITION

A radiation curable ink jet composition according to one embodiment of the present disclosure is a radiation curable ink jet composition including a polymerizable compound, the polymerizable compound includes at least one selected from the group consisting of glycerin diacrylate and glycerin triacrylate, and a total content of the glycerin diacrylate and the glycerin triacrylate with respect to a total mass of the ink jet composition is 20 percent by mass or more.

The glycerin diacrylate and the glycerin triacrylate each functioning as the polyfunctional polymerizable compound are able to preferably improve the abrasion resistance and also have a relatively low viscosity. Hence, even when a relatively large amount of the compounds described above is contained, a radiation curable ink jet composition which suppresses the viscosity increase thereof and which is excellent in abrasion resistance can be obtained. In addition, an ejection stability and a curing property of the composition and an adhesion of a coating film thereof also tend to be made preferable.

In addition, the "radiation curable ink jet composition" according to this embodiment is a composition which is used so as to be ejected from an ink jet head by an ink jet method. Hereinafter, as one embodiment of the radiation curable ink jet composition, although a radiation curable ink composition (hereinafter, also referred to as "ink composition" or "ink" in some cases) will be described, the composition according to this embodiment may also be a composition, such as a composition to be used for three-dimensional modeling, other than the ink composition.

In addition, the radiation curable ink jet composition according to this embodiment is cured when being irradiated with radioactive rays. As the radioactive rays, for example, ultraviolet rays, electron rays, infrared rays, visible light rays, X-rays, or active energy rays may be mentioned. As the radiation rays, since radioactive ray sources are easily available and widely used, and since materials suitably cured by radiation of ultraviolet rays are easily available and widely used, ultraviolet rays are preferable.

Hereinafter, components contained in the radiation curable ink jet composition (hereinafter, simply referred to as "composition" in some cases) according to this embodiment, and physical properties and a manufacturing method of the ink jet composition will be described.

### 1.1. POLYMERIZABLE COMPOUND

The radiation curable ink jet composition according to this embodiment includes a polymerizable compound. The polymerizable compound is a generic name of compounds each of which is cured when being irradiated with radioactive rays. The polymerizable compound includes a monofunctional monomer having one polymerizable functional group and a polyfunctional monomer having a plurality of polymerizable functional groups and, if needed, may also include an oligomer having at least one polymerizable functional group. The polymerizable compound may be used alone, or at least two types thereof may be used in combination.

### 1.1.1. GLYCERIN DIACRYLATE AND GLYCERIN TRIACRYLATE

The polymerizable compound according to this embodiment includes at least one selected from the group consisting of glycerin diacrylate and glycerin triacrylate.

As a commercial product of the compound as described above, for example, Aronix (registered trademark) M-920 (glycerin diacrylate/triacrylate) or M-930 (glycerin triacrylate (trade name, manufactured by Toagosei Company, Limited) may be mentioned.

The radiation curable ink jet composition according to this embodiment contains glycerin diacrylate and glycerin triacrylate at a total content of preferably 20 percent by mass or more, more preferably 25 percent by mass or more, even more preferably 30 percent by mass or more, further preferably 35 percent by mass or more, and particularly preferably 40 percent by mass or more with respect to the total mass of the ink jet composition. When the total content described above is 20 percent by mass or more, the viscosity increase of the composition is suppressed, and in addition, the abrasion resistance of the coating film thereof can be made excellent.

Although an upper limit of the total content described above is not particularly limited, the total content of the glycerin diacrylate and the glycerin triacrylate with respect to the total mass of the ink jet composition is preferably 70 percent by mass or less, more preferably 65 percent by mass or less, further preferably 60 percent by mass or less, and particularly preferably 55 percent by mass or less. When the total content described above is 70 percent by mass or less, the viscosity increase of the composition is more easily suppressed, and the viscosity thereof tends to be made preferable as the ink jet composition.

In addition, when the polymerizable compound includes the glycerin diacrylate or the glycerin triacrylate, the content of the glycerin diacrylate or the glycerin triacrylate may be preferably set to the content described above.

### 1.1.2. MONOFUNCTIONAL MONOMER

The polymerizable compound may also include a monofunctional monomer. Although the monofunctional monomer is not particularly limited, for example, there may be mentioned an aromatic group-containing monofunctional monomer, a nitrogen-containing monofunctional monomer, an alicyclic group-containing monofunctional monomer, a monofunctional monomer having a cyclic ether structure, an urethane acrylate, an aliphatic group-containing monofunctional monomer, or a hydroxy group-containing monofunctional monomer. In addition, if needed, at least one of other monofunctional monomers may also be contained. In addition, although the at least one of other monofunctional monomers is not particularly limited, a known monofunctional monomer having a polymerizable functional group, in particular such as a polymerizable functional group having an unsaturated double bond between carbon atoms, may be used.

A content of the monofunctional monomer with respect to a total mass of the polymerizable compound is preferably less than 60 percent by mass, more preferably less than 35 percent by mass, even more preferably less than 30 percent by mass, further preferably less than 25 percent by mass, particularly preferably less than 20 percent by mass, and more particularly preferably less than 15 percent by mass. In particular, when the content of the monofunctional monomer with respect to the total mass of the polymerizable compound is less than 35 percent by mass, the viscosity increase of the composition is suppressed, and in addition, the abrasion resistance of the coating film thereof tends to be made excellent. In addition, although a lower limit of the content of the monofunctional monomer is not particularly limited, the lower limit described above with respect to the total mass of the polymerizable compound is preferably 7 percent by mass or more and more preferably 10 percent by mass or more.

In addition, from the same point as described above, a content of the monofunctional monomer with respect to the total mass of the composition is preferably 45 percent by mass or less, more preferably 30 percent by mass or less, further preferably 25 percent by mass or less, particularly preferably 20 percent by mass or less, and more particularly preferably 15 percent by mass or less. Although a lower limit of the content of the monofunctional monomer described above is not particularly limited, the lower limit described above with respect to the total mass of the composition is preferably 6 percent by mass or more and more preferably 11 percent by mass or more.

Hereinafter, although examples of the monofunctional monomer will be described below, the monofunctional monomer according to this embodiment is not limited thereto. Aromatic Group-Containing Monofunctional Monomer

As the aromatic group-containing monofunctional monomer, a monomer having an aromatic group is not particularly limited, and for example, there may be mentioned phenoxyethyl (meth)acrylate, benzyl (meth)acrylate, an alkoxylated 2-phenoxyethyl (meth)acrylate, ethoxylated nonylphenyl (meth)acrylate, an alkoxylated nonylphenyl (meth)acrylate, a p-cumylphenol EO-modified (meth)acrylate, or 2-hydroxy-3-phenoxypropyl (meth)acrylate.

Among those mentioned above, phenoxyethyl (meth)acrylate or benzyl (meth)acrylate is preferable, phenoxyethyl (meth)acrylate is more preferable, and phenoxyethyl acrylate (PEA) is further preferable. Since the aromatic group-containing monomer as described above is used, a solubility of a polymerization initiator which is a solid at ordinary temperature is further improved, and the curing property of the composition tends to be improved. In particular, when an acylphosphine oxide-based polymerization initiator or a thioxanthone-based polymerization initiator, each of which is a solid at ordinary temperature, is used, the solubility thereof tends to be improved. In addition, since phenoxyethyl (meth)acrylate is used, the odor tends to be further reduced.

When the aromatic group-containing monofunctional monomer is contained, a content thereof with respect to the total mass of the composition is preferably 1 to 30 percent by mass, more preferably 3 to 20 percent by mass, and further preferably 5 to 10 percent by mass. Since the content of the aromatic group-containing monofunctional monomer with respect to the total mass of the composition is in the range described above, the viscosity of the composition is further decreased, and the abrasion resistance of the coating film thereof tends to be further improved.

### NITROGEN-CONTAINING MONOFUNCTIONAL MONOMER

Although the nitrogen-containing monofunctional monomer is not particularly limited, for example, there may be mentioned a nitrogen-containing monofunctional vinyl monomer, such as vinyl methyl oxazolidinone (VMOX), N-vinyl caprolactam, N-vinyl formamide, N-vinyl carbazole, N-vinyl acetamide, or N-vinyl pyrrolidone; a nitrogen-containing monofunctional acrylate monomer such as acryloylmorpholine; or a nitrogen-containing monofunctional acrylamide monomer, such as (meth)acrylamide, N-hydroxymethyl (meth)acrylamide, diacetone acrylamide, N,N-dimethyl (meth)acrylamide, or (meth)acrylamide of dimethylamino ethylacrylate, benzyl chloride quaternary. Among those mentioned above, a nitrogen-containing monofunctional vinyl monomer is preferable, and in particular, vinyl methyl oxazolidinone (VMOX) is more preferable. Since the nitrogen-containing monofunctional monomer as described above is used, the abrasion resistance of the coating film tends to be further improved.

When the nitrogen-containing monofunctional monomer is contained, a content thereof with respect to the total mass of the composition is preferably 5 to 30 percent by mass and more preferably 10 to 20 percent by mass. Since the content of the nitrogen-containing monofunctional monomer is in the range described above, the abrasion resistance of the coating film tends to be further improved.

### ALICYCLIC GROUP-CONTAINING MONOFUNCTIONAL MONOMER

The alicyclic group-containing monofunctional monomer is not particularly limited as long as being a monomer having no aromatic groups and having at least one saturated or unsaturated carbon ring, and for example, there may be mentioned a monomer having a monocyclic hydrocarbon group, such as tert-butylcyclohexanol acrylate or 2-(meth)acrylic acid-1,4-dioxaspiro[4,5]dec-2-ylmethyl; a monomer having an unsaturated polycyclic hydrocarbon group, such as dicyclopentenyl acrylate or dicyclopentenyl oxyethyl acrylate; or a monomer having a saturated polycyclic hydrocarbon group, such as dicyclopentanyl acrylate or isobornyl acrylate (IBXA). Among those mentioned above, a monomer having a saturated polycyclic hydrocarbon group is preferable, and in particular, isobornyl acrylate (IBXA) is preferable. Since the alicyclic group-containing monofunctional monomer as described above is used, a glass transition temperature of the coating film is easily controlled at a lower temperature, a stretchability of the coating film is improved, and the adhesion and the abrasion resistance thereof tend to be improved.

A content of the alicyclic group-containing monofunctional monomer with respect to the total mass of the composition is preferably 5 to 50 percent by mass, more preferably 5 to 30 percent by mass, and further preferably 10 to 20 percent by mass. Since the content of the alicyclic group-containing monofunctional monomer is in the range described above, for example, the abrasion resistance of the coating film tends to be further improved.

### MONOFUNCTIONAL MONOMER HAVING CYCLIC ETHER STRUCTURE

Although the monofunctional monomer having a cyclic ether structure is not particularly limited as long as being a monomer, such as tetrahydrofuran or tetrahydropyran, having a cyclic ether skeleton, for example, cyclic trimethylolpropane formal acrylate (CTFA), cyclic trimethylolpropane formal methacrylate, tetrahydrofurfuryl acrylate (THFA), or tetrahydrofurfuryl methacrylate may be mentioned. Among those mentioned above, cyclic trimethylolpropane formal acrylate (CTFA) or tetrahydrofurfuryl acrylate (THFA) is preferable. When the monofunctional monomer having a cyclic ether structure as described above is used, since the glass transition temperature of the coating film is easily controlled at a lower temperature, the stretchability of the coating film can be improved, and the adhesion and the abrasion resistance thereof tend to be improved.

When the monofunctional monomer having a cyclic ether structure is contained, a content thereof with respect to the total mass of the composition is preferably 5 to 30 percent by mass and more preferably 10 to 25 percent by mass. When the content of the monofunctional monomer having a cyclic ether structure is in the range described above, for example, the adhesion of the coating film may be further improved in some cases.

### URETHANE ACRYLATE

The urethane acrylate is not particularly limited as long as being a (meth)acrylate ester having an urethane bond, and for example, there may be mentioned (methylcarbamoyloxy)ethyl (meth)acrylate, (ethylcarbamoyloxy)ethyl (meth)acrylate, (propylcarbamoyloxy)ethyl (meth)acrylate, (butylcarbamoyloxy)ethyl (meth)acrylate, (methylcarbamoyloxy)ethoxyethyl (meth)acrylate, (ethylcarbamoyloxy)ethoxyethyl (meth)acrylate, (propylcarbamoyloxy)ethoxyethyl (meth)acrylate, or (butylcarbamoyloxy)ethoxyethyl (meth)acrylate. Since the urethane acrylate as described above is used, the viscosity of the composition is further decreased, and the abrasion resistance of the coating film to be obtained tends to be further improved.

When the urethane acrylate is contained, a content thereof with respect to the total mass of the composition is preferably 0.5 to 7.5 percent by mass, more preferably 1.0 to 5.0 percent by mass, and further preferably 2.0 to 4.0 percent by mass. Since the content of the urethane acrylate with respect to the total mass of the composition is in the range described above, the viscosity of the composition is further decreased, and the abrasion resistance of the coating film to be obtained tends to be further improved.

### ALIPHATIC GROUP-CONTAINING MONOFUNCTIONAL MONOMER

Although the aliphatic group-containing monofunctional monomer is not particularly limited, for example, a monomer represented by the following general formula (II) may be mentioned.

H₂C=CR⁴-CO-O-R⁵ (II)

In the formula (II), R⁴ represents a hydrogen atom or a methyl group, and R⁵ represents a linear or branched aliphatic group having 4 to 20 carbon atoms.

Although the aliphatic group-containing monofunctional monomer as described above is not particularly limited as long as being a saturated or unsaturated, linear or branched monomer having no carbon rings, for example, there may be mentioned isoamyl (meth)acrylate, stearyl (meth)acrylate, lauryl (meth)acrylate, octyl (meth)acrylate, decyl (meth)acrylate, isodecyl (meth)acrylate, isononyl (meth)acrylate, isomyristyl (meth)acrylate, isostearyl (meth)acrylate, 2-hydroxybutyl (meth)acrylate, butoxyethyl (meth)acrylate, 2-hydroxyethyl (meth)acrylate, or 2-hydroxypropyl (meth)acrylate. Among those mentioned above, a saturated linear or branched aliphatic group-containing monofunctional monomer is preferable, and lauryl (meth)acrylate or isononyl (meth)acrylate is more preferable. Since the aliphatic group-containing monofunctional monomer as described above is used, the viscosity of the composition is further decreased, and in addition, the adhesion of the coating film tends to be further improved.

When the aliphatic group-containing monofunctional monomer is contained, a content thereof with respect to the total mass of the composition is preferably 1.0 to 17 percent by mass, more preferably 3.0 to 15 percent by mass, and further preferably 5.0 to 12 percent by mass. Since the content of the aliphatic group-containing monofunctional monomer with respect to the total mass of the composition is in the range described above, the viscosity of the composition is further decreased, and the adhesion of the coating film tends to be further improved.

### HYDROXY GROUP-CONTAINING MONOFUNCTIONAL MONOMER

Although the hydroxy group-containing monofunctional monomer is not particularly limited, for example, there may be mentioned 2-hydroxyethyl (meth)acrylate, 2-hydroxypropyl (meth)acrylate, 3-hydroxypropyl acrylate, 2-hydroxybutyl (meth)acrylate, 4-hydroxybutyl (meth)acrylate, ethylene glycol monovinyl ether, diethylene glycol monovinyl ether, or 2-(meth)acryloyloxy-2-hydroxypropyl phthalate. Since the hydroxy group-containing monofunctional monomer as described above is used, the viscosity of the composition is further decreased, and in addition, the adhesion of the coating film tends to be further improved.

When the hydroxy group-containing monofunctional monomer is contained, a content thereof with respect to the total mass of the composition is preferably 1.0 to 35 percent by mass, more preferably 3.0 to 25 percent by mass, and further preferably 5.0 to 15 percent by mass. Since the content of the hydroxy group-containing monofunctional monomer with respect to the total mass of the composition is in the range described above, the viscosity of the composition is further decreased, and the adhesion of the coating film to be obtained tends to be further improved.

### OTHER MONOFUNCTIONAL MONOMERS

As other monofunctional monomers, besides those monofunctional monomers mentioned above, for example, there may also be used an unsaturated carboxylic acid, such as (meth)acrylic acid, itaconic acid, crotonic acid, isocrotonic acid, or maleic acid; a salt of the unsaturated carboxylic acid mentioned above; an ester, an urethane, an amide, or an anhydride of an unsaturated carboxylic acid; acrylonitrile, styrene, or various types of unsaturated polyesters, unsaturated polyethers, or unsaturated polyamides.

The monofunctional monomers mentioned above may be used alone, or at least two types thereof may be used in combination.

Among those mentioned above, the polymerizable compound (monofunctional monomer) preferably includes at least one selected from the group consisting of isobornyl acrylate (IBXA), cyclic trimethylolpropane formal acrylate (CTFA), and tetrahydrofurfuryl acrylate (THFA). Since the polymerizable compound (monofunctional monomer) as described above is contained, the glass transition temperature of the coating film is easily controlled at a relatively higher temperature, the stretchability of the coating film is improved, and for example, the abrasion resistance thereof tends to be further improved. 1.1.3. POLYFUNCTIONAL MONOMER

The polymerizable compound includes at least one polyfunctional monomer other than the aforementioned glycerin diacrylate and glycerin triacrylate. Although the polyfunctional monomer as described above is not particularly limited, for example, there may be mentioned a vinyl group-containing (meth)acrylate, which is a mandatory component of the ink a difunctional (meth)acrylate, or an at least trifunctional (meth)acrylate. In addition, the polyfunctional monomer is not limited to those mentioned above.

A content of the polyfunctional monomer other than the aforementioned glycerin diacrylate and glycerin triacrylate with respect to the total mass of the composition is preferably 5 to 50 percent by mass and more preferably 10 to 40 percent by mass. When the content described above is in the range described above, in some cases, the viscosity increase of the composition may be preferably suppressed, and the abrasion resistance of the coating film thereof may be made more preferable.

### VINYL GROUP-CONTAINING (METH)ACRYLATE

The vinyl group-containing (meth)acrylate is a compound represented by the following general formula (I) may be mentioned. Although being a polyfunctional monomer, the vinyl group-containing (meth)acrylate represented by the following general formula (I) has a relatively low viscosity and is superior in curing property. Hence, when the polymerizable compound as described above is contained, while the viscosity increase of the composition is suppressed, for example, the curing property of the composition and the abrasion resistance of the coating film thereof tend to be further improved.

H₂C-CR¹-CO-OR²-O-CH=CH-R³ (I)

In the formula, R¹ represents a hydrogen atom or a methyl group, R² represents a divalent organic residue having 2 to 20 carbon atoms, and R³ represents a hydrogen atom or a monovalent organic residue having 1 to 11 carbon atoms.

In the above general formula (I), as the divalent organic residue having 2 to 20 carbon atoms represented by R², for example, there may be mentioned a substituted or unsubstituted linear, branched, or cyclic alkylene group having 2 to 20 carbon atoms, a substituted or unsubstituted alkylene group having 2 to 20 carbon atoms and an oxygen atom of an ether bond and/or an ester bond in the structure, or a substituted or unsubstituted divalent aromatic group having 6 to 11 carbon atoms. Among those mentioned above, an alkylene group, such as an ethylene group, an n-propylene group, an isopropylene group, or a butylene group, having 2 to 6 carbon atoms or an oxyalkylene group, such as an oxyethylene group, an oxy n-propylene group, an oxyisopropylene group, or an oxybutylene group, having 2 to 9 carbon atoms and an oxygen atom of an ether bond in the structure is preferable. Furthermore, since the viscosity of the composition can be further decreased, and in addition, for example, since the curing property of the composition and the abrasion resistance of the coating film thereof can be made further preferable, a compound having a glycol ether chain in which R² represents an oxyalkylene group, such as an oxyethylene group, an oxy n-propylene group, an oxyisopropylene group, or an oxybutylene group, having 2 to 9 carbon atoms and an oxygen atom of an ether bond in the structure is more preferable.

In the above general formula (I), as the monovalent organic residue having 1 to 11 carbon atoms represented by R³, a substituted or unsubstituted linear, branched, or cyclic alkyl group having 1 to 11 carbon atoms or a substituted or unsubstituted aromatic group having 6 to 11 carbon atoms is preferable. Among those mentioned above, an alkyl group, such as a methyl group or an ethyl group, having 1 to 2 carbon atoms or an aromatic group, such as a phenyl group or a benzyl group, having 6 to 8 carbon atoms is preferably used.

When the organic residues mentioned above each may be a substituted group, the substituent thereof is classified into a group including at least one carbon atom and a group including no carbon atoms. First, when the above substituent includes at least one carbon atom, the number of carbon atoms thereof is counted in the number of carbon atoms of the organic residue. Although the group including at least one carbon atom is not particularly limited to those mentioned below, for example, a carboxy group or an alkoxy group may be mentioned. In addition, although the group including no carbon atoms is not particularly limited to those mentioned below, for example, a hydroxy group or a halo group may be mentioned.

Although a concrete example of the compound represented by the above general formula (I) is not particularly limited, for example, there may be mentioned 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 1,1-dimethyl-2-vinyloxyethyl (meth)acrylate, 3-vinyloxybutyl (meth)acrylate, 1-methyl-2-vinylxypropyl (meth)acrylate, 2-vinyloxybutyl (meth)acrylate, 4-vinyloxycyclohexyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(2-vinyloxyethoxy)ethyl methacrylate, 2-(2-vinyloxyethoxy)ethyl acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2- (vinyloxyisopropoxyethoxy)ethyl (meth)acrylate, 2-(vinyloxyisopropoxyisopropoxy)ethyl (meth)acrylate, 2-(vinyloxyethoxyethoxy)propyl (meth)acrylate, 2-(Vinyloxyethoxyisopropoxy)propyl (meth)acrylate, 2-(vinyloxyisopropoxyethoxy)propyl (meth)acrylate, 2-(vinyloxyisopropoxyisopropoxy)propyl (meth)acrylate, 2-(vinyloxyethoxyethoxy)isopropyl (meth)acrylate, 2-(vinyloxyethoxyisopropoxy)isopropyl (meth)acrylate, 2-(vinyloxyisopropoxyethoxy)isopropyl (meth)acrylate, 2-(vinyloxyisopropoxyisopropoxy)isopropyl (meth)acrylate, 2-(vinyloxyethoxyethoxyethoxy)ethyl (meth)acrylate, 2-(vinyloxyethoxyethoxyethoxyethoxy)ethyl (meth)acrylate, 2-(isopropenoxyethoxy)ethyl (meth)acrylate, 2-(isopropenoxyethoxyethoxy)ethyl (meth)acrylate, 2-(isopropenoxyethoxyethoxyethoxy)ethyl (meth)acrylate, 2- (isopropenoxyethoxyethoxyethoxyethoxy)ethyl (meth)acrylate, a polyethylene glycol monovinyl ether (meth)acrylate, or a polypropylene glycol monovinyl ether (meth)acrylate. Among those concrete examples, since the balance among the curing property of the composition, the abrasion resistance of the coating film thereof, and the viscosity of the composition is likely to be obtained, 2-(2-vinyloxyethoxy)ethyl acrylate is particularly preferable. In addition, in this embodiment, 2-(2-vinyloxyethoxy)ethyl acrylate is also called VEEA in some cases.

A content of the vinyl group-containing (meth)acrylate, in particular, a content of the vinyl group-containing (meth)acrylate represented by the above general formula (I), with respect to the total mass of the composition is preferably 5 to 40 percent by mass, more preferably 10 to 35 percent by mass, and further preferably 15 to 30 percent by mass. When the content described above is in the above range, the viscosity of the composition is decreased, and the curing property of the composition and the abrasion resistance of the coating film thereof tend to be further improved.

### DIFUNCTIONAL (METH)ACRYLATE

Although the difunctional (meth)acrylate is not particularly limited, for example, there may be mentioned dipropylene glycol diacrylate (DPGDA), diethylene glycol di(meth)acrylate, triethylene glycol di(meth)acrylate, tetraethylene glycol di(meth)acrylate, a polyethylene glycol di(meth)acrylate, dipropylene glycol dimethacrylate, tripropylene glycol diacrylate (TPGDA), tripropylene glycol dimethacrylate, a polypropylene glycol di(meth)acrylate, 1,4-butanediol di(meth)acrylate, 1,6-hexandiol di(meth)acrylate, 1,9-nonanediol di(meth)acrylate, neopentyl glycol di(meth)acrylate, dimethylol tricyclodecane di(meth)acrylate, di(meth)acrylate of an EO (ethylene oxide) adduct of bisphenol A, di(meth)acrylate of a PO (propylene oxide) adduct of bisphenol A, hydroxypivalic acid neopentyl glycol di(meth)acrylate, or a polytetramethylene glycol di(meth)acrylate.

When the difunctional (meth)acrylate is contained, a content thereof with respect to the total mass of the composition is preferably 1 to 30 percent by mass and more preferably 2 to 20 percent by mass.

### AT LEAST TRIFUNCTIONAL (METH)ACRYLATE

The at least trifunctional (meth)acrylate is not particularly limited, and for example, there may be mentioned trimethylolpropane tri(meth)acrylate, an EO-modified trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, a caprolactone-modified trimethylolpropane (meth)acrylate, pentaerythritol ethoxy tetra(meth)acrylate, or a caprolactam-modified dipentaerythritol hexa(meth)acrylate.

When the at least trifunctional (meth)acrylate is contained, a content thereof with respect to the total mass of the composition is preferably 5 to 30 percent by mass and more preferably 10 to 20 percent by mass.

### 1.1.4. OLIGOMER

The oligomer is a multimer using at least one polymerizable compound as a constituent component and is a compound having at least one polymerizable functional group. In addition, the polymerizable compound of this embodiment is not limited to the monofunctional monomers and the polyfunctional monomers mentioned above. In this embodiment, a compound having a molecular weight of 1,000 or more is defined as the oligomer, and a compound having a molecular weight of 1,000 or less is defined as the monomer.

Although the oligomer as described above is not particularly limited, for example, an urethane acrylate oligomer in which a repeating structural unit is an urethane, a polyester acrylate oligomer in which a repeating structural unit is an ester, or an epoxy acrylate oligomer in which a repeating structural unit is an epoxy may be mentioned.

Among those mentioned above, an urethane acrylate oligomer is preferable, an aliphatic urethane acrylate oligomer or an aromatic urethane acrylate oligomer is more preferable, and an aliphatic urethane acrylate oligomer is further preferable. In addition, the urethane acrylate oligomer is preferably a tetrafunctional or less urethane acrylate oligomer and more preferably a difunctional urethane acrylate oligomer. Since the oligomer as described above is used, the viscosity of the composition is further decreased, and for example, the abrasion resistance of the coating film thereof tends to be further improved.

As a commercial product of the oligomer, for example, CN9893 (difunctional aliphatic urethane oligomer, manufactured by Sartomer) may be mentioned.

When the oligomer is used, a content thereof with respect to the total mass of the composition is preferably 0.5 to 10 percent by mass, more preferably 0.5 to 5 percent by mass, and further preferably 1 to 3 percent by mass. Since the content described above is in the above range, the viscosity of the composition is further decreased, and for example, the abrasion resistance of the coating film thereof tends to be further improved.

### 1.2. POLYMERIZATION INITIATOR

### ETHYL(2,4,6-TRIMETHYLBENZOYL)PHENYLPHOSPHINATE

The radiation curable ink jet composition according to this embodiment preferably contains, as a polymerization initiator, ethyl(2,4,6-trimethylbenzoyl)phenylphosphinate, and if needed, at least one of other polymerization initiators may also be used. Since ethyl(2,4,6-trimethylbenzoyl)phenylphosphinate is a liquid polymerization initiator at ordinary temperature, the compatibility with glycerin diacrylate and glycerin triacrylate is excellent, and for example, the curing property of the composition and the abrasion resistance of the coating film thereof tends to be further improved. In addition, when an "acylphosphine oxide-based polymerization initiator" is simply described, this polymerization initiator indicates an acylphosphine oxide-based polymerization initiator other than ethyl(2,4,6-trimethylbenzoyl)phenylphosphinate.

A content of ethyl(2,4,6-trimethylbenzoyl)phenylphosphinate with respect to the total mass of the composition is preferably 0.5 percent by mass or more, more preferably 1.0 percent by mass or more, even more preferably 2.0 percent by mass or more, further preferably 2.5 percent by mass or more, and particularly preferably 3.0 percent by mass or more. Since the content of ethyl(2,4,6-trimethylbenzoyl)phenylphosphinate with respect to the total mass of the composition is 0.5 percent by mass or more, for example, the curing property of the composition and the abrasion resistance of the coating film thereof are further improved, and even when the at least one of other polymerization initiators is used, since the use amount of the at least one of other polymerization initiators is relatively decreased, the solubility of the polymerization initiator tends to be further improved.

In addition, the content of ethyl(2,4,6-trimethylbenzoyl)phenylphosphinate with respect to the total mass of the composition is preferably 20 percent by mass or less, more preferably 15 percent by mass or less, even more preferably 10 percent by mass or less, and further preferably 7.5 percent by mass or less. Since the content of ethyl(2,4,6-trimethylbenzoyl)phenylphosphinate with respect to the total mass of the composition is 20 percent by mass or less, the viscosity of the composition tends to be further decreased.

Furthermore, a content of ethyl(2,4,6-trimethylbenzoyl)phenylphosphinate with respect to a total mass of the polymerization initiator is preferably 10 to 100 percent by mass, more preferably 20 to 80 percent by mass, and further preferably 30 to 60 percent by mass. Since the content of ethyl(2,4,6-trimethylbenzoyl)phenylphosphinate with respect to the total mass of the polymerization initiator is in the range described above, for example, the curing property of the composition and the abrasion resistance of the coating film thereof are further improved, and even when the at least one of other polymerization initiators is used, since the use amount of the at least one of other polymerization initiators is relatively decreased, the solubility of the polymerization initiator tends to be further improved. In addition, the viscosity of the composition also tends to be further decreased.

A commercial product of ethyl(2,4,6-trimethylbenzoyl)phenylphosphinate may also be used, and for example, Omnirad TPO-L (manufactured by IGM Resins B.V.) may be mentioned.

### OTHER POLYMERIZATION INITIATORS

As other polymerization initiators, any polymerization initiators which generate active species when being irradiated with radioactive rays may be used, and for example, there may be mentioned a known polymerization initiator, such as an acylphosphine oxide-based polymerization initiator, a thioxanthone-based polymerization initiator, an alkylphenone-based polymerization initiator, or a benzophenone-based polymerization initiator. Among those mentioned above, an acylphosphine oxide-based polymerization initiator or a thioxanthone-based polymerization initiator is preferable, and an acylphosphine oxide-based polymerization initiator is more preferable. Since the polymerization initiator as described above is used, the curing property of the composition and the abrasion resistance of the coating film thereof are further improved, and in particular, the curing property tend to be further improved by a curing process using light emitted from an UV-LED. In addition, the polymerization initiator may be used alone, or at least two types thereof may be used in combination.

A content of at least one of the other polymerization initiators with respect to the total mass of the composition is preferably 1.0 to 10.0 percent by mass, more preferably 1.0 to 8.0 percent by mass, and further preferably 2.0 to 7.0 percent by mass. Since the content of at least one of the other polymerization initiators is in the range described above, for example, the curing property of the composition, the abrasion resistance of the coating film thereof, and the solubility of the polymerization initiator tend to be further improved.

In addition, a total content of the polymerization initiator including ethyl(2,4,6-trimethylbenzoyl)phenylphosphinate and at least one of the other polymerization initiators is preferably 5.0 to 19 percent by mass, more preferably 6.0 to 17 percent by mass, and further preferably 7.0 to 15 percent by mass. Since the total content of the polymerization initiator is in the range described above, for example, the curing property of the composition, the abrasion resistance of the coating film thereof, and the solubility of the polymerization initiator tend to be further improved.

Although the acylphosphine oxide-based polymerization initiator is not particularly limited, for example, 2,4,6-trimethylbenzoyldiphenylphosphine oxide, bis(2,4,6-trimethylbenzoyl)-phenylphosphine oxide, or bis(2,6-dimethylbenzoyl)-2,4,4-trimethylpentylphosphine oxide may be mentioned.

As a commercial product of the acylphosphine oxide-based polymerization initiator as described above, for example, there may be mentioned Omnirad 819 (bis(2,4,6-trimethylbenzoyl)-phenylphosphine oxide), IRGACURE 1800 (mixture of bis(2,6-dimethoxylbenzoyl)-2,4,4-trimethylpentylphenylphosphine oxide and 1-hydroxy-cyclohexyl-phenylketone at a mass ratio of 25: 75), or Omnirad TPO (2,4,6-trimethylbenzoyldiphenylphosphine oxide).

A content of the acylphosphine oxide-based polymerization initiator with respect to the total mass of the composition is preferably 2.0 percent by mass or more, more preferably 2.0 to 10 percent by mass, and further preferably 2.0 to 8 percent by mass. Since the content of the acylphosphine oxide-based polymerization initiator is in the range described above, the curing property of the composition, the abrasion resistance of the coating film thereof, and the solubility of the polymerization initiator tend to be further improved.

Although the thioxanthone-based polymerization initiator is not particularly limited, for example, there may be mentioned thioxanthone, 2-methylthioxanthone, 2,4-diethylthioxanthone, 2-isopropylthioxanthone, 4-isopropylthioxanthone, 2-chlorothioxanthone, 2,4-diethylthioxanthene-9-one, a diester of carboxymethoxythioxanthone and a polytetramethylene glycol, or 1,3,-di({α-[1-chloro-9-oxo-9H-thioxanthene-4-yl]oxy}acetylpoly[oxy(1-methylethylene)]oxy)-2,2-bis({α-[1-chloro-9-oxo-9H-thioxanthene-4-yl]oxy}acetylpoly[oxy(1-methylethylene)]oxymethylpropane.

In addition, the thioxanthone-based polymerization initiator may also be used as a sensitizer together with the polymerization initiator. A content of the sensitizer with respect to the total mass of the composition is preferably 0.1 percent by mass or more, more preferably 0.5 to 10 percent by mass, and further preferably 1.0 to 5.0 percent by mass. As a commercial product of the sensitizer, for example, Speedcure DETX (2,4-diethylthioxanthene-9-one, manufactured by LAMBSON) may be mentioned.

Although the alkylphenone-based polymerization initiator is not particularly limited, for example, there may be mentioned 2-hydroxy-1-(4-(4-(2-hydroxy-2-methylpropyonyl)benzyl)phenyl-2-methylpropane-1-one, 2-benzyl-2-dimethylamino-1-(4-morpholinophenyl)-butanone-1, 2-(dimethylamino)-2-[(4-methylphenyl)methyl]-1-[4-(4-morpholinyl)phenyl]-1-butanone, or 2-methyl-1-(4-methylthiophenyl)-2-morpholinopropane-1-one.

Although the benzophenone-based polymerization initiator is not particularly limited, for example, there may be mentioned 4,4'-bis(diethylamino)benzophenone, 4-chlorobenzophenone, 4,4'-dimethoxybenzophenone, or 4,4'-diaminobenzophenone.

### 1.3. FLUORESCENT BRIGHTENER

The radiation curable ink jet composition according to this embodiment may also contain a fluorescent brightener. Since the fluorescent brightener is contained, yellowing of a cured material may be suppressed in some cases. In addition, since the fluorescent brightener is contained, the curing property of the composition can be made more excellent, and in addition, a white degree of the cured material may be improved in some cases. In addition, the yellowing of the cured material may be confirmed, for example, using a common colorimeter or the like.

Although the fluorescent brightener is not particularly limited, for example, there may be mentioned a naphthalene benzoxazolyl derivative such as 1,4-bis-(2-benzoxazolyl)naphthalene; a thiophenebenzoxazolyl derivative such as 2,5-thiophenediylbis(5-tert-butyl-1,3-benzoxazole); a stilbene benzoxazolyl derivative, a cumarin derivative, a styrene biphenyl derivative, a pyrazolone derivative, a stilbene derivative, a styryl derivative of benzene and biphenyl, a bis(benzazole-2-yl) derivative, a carbostyril, a naphthalimide, a dibenzothiophene-5,5'-dioxide derivative, a pyrene derivative, or a pyridotriazole derivative.

As a commercial product of the fluorescent brightener, for example, there may be mentioned Telalux OB, Telalux KCB, Telalux KS, or Telalux KS-N (manufactured by Clariant Japan K.K.); or Tinopal OB-CO or Tinopal NFW LIQ (manufactured by BASF).

When the fluorescent brightener is used, a content thereof with respect to the total mass of the composition is preferably 0.01 to 1.0 percent by mass and more preferably 0.07 to 0.70 percent by mass.

### 1.4. SURFACTANT

The radiation curable ink jet composition according to this embodiment may also contain a surfactant. Although the surfactant is not particularly limited, for example, an acetylene glycol-based surfactant, a fluorine-based surfactant, or a silicone-based surfactant may be mentioned.

The acetylene glycol-based surfactant is not particularly limited, and for example, there may be mentioned 2,4,7,9-tetramethyl-5-decyne-4,7-diol, an alkylene oxide adduct thereof, 2,4-dimethyl-5-decyne-4-ol, or an alkylene oxide adduct thereof.

Although the fluorine-based surfactant is not particularly limited, for example, there may be mentioned a perfluoroalkyl sulfonate salt, a perfluoroalkyl carboxylate salt, a perfluoroalkyl phosphate ester, a perfluoroalkyl ethylene oxide adduct, a perfluoroalkyl alkyl betaine, or a perfluoroalkylamine oxide compound.

Although the silicone-based surfactant is not particularly limited, for example, a polysiloxane-based compound, a polyester modified silicone, or a polyether modified organosiloxane may be mentioned. As the polyester modified silicone, for example, BYK-347, 348, 3510, or 3530 (manufactured by BYK Additives & Instruments) may be mentioned, and as the polyether modified silicone, for example, BYK-3570 or BYK-UV3500 (manufactured by BYK Additives & Instruments) may be mentioned.

A content of the surfactant with respect to the total mass of the composition is preferably 0.1 to 1 percent by mass and more preferably 0.2 to 0.8 percent by mass. Since the content of the surfactant is in the range described above, a wettability of the composition tends to be further improved.

### 1.5. POLYMERIZATION INHIBITOR

Since a storage stability of the composition can be further improved, the radiation curable ink jet composition according to this embodiment may also contain a polymerization inhibitor. The polymerization inhibitor may be used alone, or at least two types thereof may be used in combination.

Although the polymerization inhibitor is not particularly limited, for example, there may be mentioned p-methoxyphenol, hydroquinone monomethyl ether (MEHQ), 4-hydroxy-2,2,6,6-tetramethylpiperidine-N-oxyl, hydroquinone, cresol, t-butyl catechol, 3,5-di-t-butyl-4-hydroxytoluene, 2,2'-methylenebis(4-methyl-6-t-butylphenol), 2,2'-methylenebis(4- ethyl-6-butylphenol), 4,4'-thiobis(3-methyl-6-t-butylphenol), or a hindered amine compound.

In addition, as a commercial product of the polymerization inhibitor, for example, there may be mentioned Adekastab LA-7RD (2,2,6,6-tetramethyl-4-hydroxypiperidine-1-oxyl), LA-52, LA-57, LA-62, LA-63P, LA-68LD, LA-77Y, LA-77G, LA-81, LA-82 (1,2,2,6,6-pentamethyl-4-piperidyl methacrylate), or LA-87 (trade name, manufactured by ADEKA Corporation); IRGASTAB UV 10 (4,4'-[1,10-dioxo-1,10-decanediyl)bis(oxy)]bis[2,2,6,6-tetramethyl]-1-piperidinyloxy) (CAS. 2516-92-9), TINUVIN 123 (4-hydroxy-2,2,6,6-tetramethylpiperidine-N-oxyl), TINUVIN 111FDL, TINUVIN 144, TINUVIN 152, TINUVIN 292, TINUVIN 765, TINUVIN 770DF, TINUVIN 5100, SANOL LS-2626, CHIMASSORB 119FL, CHIMASSORB 2020 FDL, CHIMASSORB 944 FDL, or TINUVIN 622 LD (trade name, manufactured by BASF); or FA-711HM or FA-712HM (2,2,6,6-tetramethylpiperidinyl methacrylate)(trade name, manufactured by Hitachi Chemical Co., Ltd.).

When the polymerization inhibitor is used, a content thereof with respect to the total mass of the composition is preferably 0.01 to 1.0 percent by mass, more preferably 0.1 to 0.5 percent by mass, and further preferably 0.1 to 0.2 percent by mass.

### 1.6. COLORANT

The radiation curable ink jet composition according to this embodiment may further contain a colorant. As the colorant, a pigment and/or a dye may be used.

A content of the colorant with respect to the total mass of the composition is preferably 0.1 to 10.0 percent by mass and more preferably 0.5 to 5.0 percent by mass. In addition, the radiation curable ink jet composition according to this embodiment may be used as a clear ink which contains no colorants or contains a colorant (for example, at a content of 0.1 percent by mass or less) so as not to be colored therewith.

In addition, when the pigment is used, a pigment dispersion liquid is prepared in advance, and this pigment dispersion liquid may be used for the radiation curable ink jet composition. In the pigment dispersion liquid, for example, the polymerizable compound and a dispersant (which will be described later) to disperse the pigment may also be contained.

### PIGMENT

When the pigment is used as the colorant, a weather resistance of the composition may be improved in some cases. As the pigment, both an inorganic pigment and an organic pigment may be used.

As the inorganic pigment, for example, a carbon black (C.I. Pigment Black 7), such as a furnace black, a lamp black, an acetylene black, or a channel black, an iron oxide, or a titanium oxide may be used.

As the organic pigment, for example, there may be mentioned an azo pigment, such as an insoluble azo pigment, a condensed azo pigment, an azo lake, or a chelate azo pigment; a polycyclic pigment, such as a phthalocyanine pigment, a perylene pigment, a perinone pigment, an anthraquinone pigment, a quinacridone pigment, a dioxane pigment, a thioindigo pigment, an isoindolinone pigment, or a quinophthalone pigment; a dye chelate (such as a basic dye type chelate or an acidic dye type chelate), a dye lake (such as a basic dye type lake or an acidic dye type lake), a nitro pigment, a nitroso pigment, a carbon black, an aniline black, or a daylight fluorescent pigment.

As a black pigment, for example, there may be mentioned No.2300, No.900, MCF88, No.33, No.40, No.45, No.52, MA7, MA8, MA100, or No.2200B (trade name, manufactured by Mitsubishi Chemical Corporation); Raven 5750, Raven 5250, Raven 5000, Raven 3500, Raven 1255, or Raven 700 (trade name, manufactured by Carbon Columbia); Rega1 400R, Rega1 330R, Rega1 660R, Mogul L, Monarch 700, Monarch 800, Monarch 880, Monarch 900, Monarch 1000, Monarch 1100, Monarch 1300, or Monarch 1400 (trade name, manufactured by Cabot Japan K.K.); or Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, or Special Black 4 (trade name, manufactured by Degussa).

As a white pigment, for example, there may be mentioned C.I. Pigment White 6, 18, or 21, a metal oxide, or a metal compound, such as barium sulfate or calcium carbonate. As the metal oxide, for example, titanium dioxide, zinc oxide, silica, alumina, or magnesium oxide may be mentioned.

As a yellow pigment, for example, there may be mentioned C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, or 180.

As a magenta pigment, for example, there may be mentioned C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48(Ca), 48(Mn), 57(Ca), 57:1, 88, 112, 114, 122, 123, 144, 146, 149, 150, 166, 168, 170, 171, 175, 176, 177, 178, 179, 184, 185, 187, 202, 209, 219, 224, or 245, or C.I. Pigment Violet 19, 23, 32, 33, 36, 38, 43, or 50.

As a cyan pigment, for example, there may be mentioned C.I. Pigment Blue 1, 2, 3, 15, 15:1, 15:2, 15:3, 15:34, 15:4, 16, 18, 22, 25, 60, 65, or 66, or C.I. Vat Blue 4 or 60.

In addition, as a color pigment other than the magenta, the cyan, and the yellow, for example, there may be mentioned C.I. Pigment Green 7 or 10, C.I. Pigment Brown 3, 5, 25, or 26, or C.I. Pigment Orange 1, 2, 5, 7, 13, 14, 15, 16, 24, 34, 36, 38, 40, 43, or 63.

The pigments mentioned above may be used alone, or at least two types thereof may be used in combination.

### DYE

As the colorant, a dye may also be used. Although the dye is not particularly limited, for example, an acidic dye, a direct dye, a reactive dye, or a basic dye may be used. The dye may be use alone, or at least two types thereof may be used in combination.

Although the dye is not particularly limited, for example, there may be mentioned C.I. Acid Yellow 17, 23, 42, 44, 79, or 142, C.I. Acid Red 52, 80, 82, 249, 254, or 289, C.I. Acid Blue 9, 45, or 249, C.I. Acid Black 1, 2, 24, or 94, C.I. Food Black 1 or 2, C.I. Direct Yellow 1, 12, 24, 33, 50, 55, 58, 86, 132, 142, 144, or 173, C.I. Direct Red 1, 4, 9, 80, 81, 225, or 227, C.I. Direct Blue 1, 2, 15, 71, 86, 87, 98, 165, 199, or 202, C.I. Direct Black 19, 38, 51, 71, 154, 168, 171, or 195, C.I. Reactive Red 14, 32, 55, 79, or 249, or C.I. Reactive Black 3, 4, or 35.

### DISPERSANT

When the radiation curable ink jet composition contains a pigment, in order to further improve a pigment dispersibility, a dispersant may be further contained. The dispersant may be used alone, or at least two types thereof may be used in combination.

Although the dispersant is not particularly limited, for example, a dispersant, such as a high molecular weight dispersant, which is generally used for preparation of a pigment dispersion liquid may be mentioned. As a concrete example thereof, a dispersant containing, as a primary component, at least one selected from the group consisting of a polyoxyalkylene, a polyalkylene polyamine, a vinyl-based polymer, a copolymer thereof, an acrylic-based polymer, a copolymer thereof, a polyester, a polyamide, a polyimide, a polyurethane, an amino-based polymer, a silicon-containing polymer, a sulfur-containing polymer, a fluorine-containing polymer, and an epoxy resin may be mentioned.

As a commercial product of the high molecular weight dispersant, for example, there may be mentioned AJISPER series manufactured by Ajinomoto Fine-Techno Co., Inc.; Solsperse series (such as Solsperse 36000) available from Avecia and Noveon; DISPER BYK series manufactured by BYK Additives & Instruments; or DISPARLON series manufactured by Kusumoto Chemicals, Ltd.

When the dispersant is used, a content thereof with respect to the total mass of the composition is preferably 0.01 to 1.0 percent by mass and more preferably 0.1 to 0.5 percent by mass.

### 1.7. Other components

The radiation curable ink jet composition according to this embodiment may further contain, if needed, various types of additives, such as a chain transfer agent, a crosslinking agent, an antioxidant, an antiseptic agent, a flame retardant, an antistatic agent, and/or an organic or an inorganic filler.

### 1.8. PHYSICAL PROPERTIES OF COMPOSITION

A viscosity at 20°C of the radiation curable ink jet composition according to this embodiment is preferably 15 mPa·s or less, more preferably 10 mPa·s or less, and further preferably 6 mPa·s or less. Since the viscosity of the composition at 20°C is in the range described above, an appropriate amount of the composition is ejected from a nozzle, and flight bending and scattering of the composition can be further suppressed; hence, the radiation curable ink jet composition described above can be preferably used by an ink jet recording apparatus.

In addition, the viscosity can be measured using a viscoelasticity tester MCR-300 (manufactured by Pysica) such that in an environment at 20°C, a shear rate is increased from 10 to 1,000, and a viscosity at a shear rate of 200 is read.

A surface tension at 20°C of the radiation curable ink jet composition according to this embodiment is preferably 20 to 40 mN/m. When the surface tension at 20°C of the radiation curable ink jet composition is in the range described above, the composition is unlikely to wet a liquid repellent-treated nozzle surface. Accordingly, a normal and an appropriate amount of the composition is ejected from the nozzle, and the flight bending and the scattering of the composition can be further suppressed; hence, the radiation curable ink jet composition described above can be preferably used by an ink jet recording apparatus.

In addition, the surface tension can be measured using an automatic surface tensiometer CBVP-Z (manufactured by Kyowa Interface Science Co., Ltd.) such that in an environment at 20°C, a surface tension at which the radiation curable ink jet composition wets a platinum plate is confirmed.

### 1.9. METHOD FOR MANUFACTURING COMPOSITION

Production (preparation) of the radiation curable ink jet composition can be performed such that, for example, the components to be contained in the composition are mixed and stirred so as to be sufficiently and uniformly mixed together. In this embodiment, the preparation of the radiation curable ink jet composition preferably has during a preparation process, a step of performing an ultrasonic wave treatment and/or a heating treatment on a mixture obtained by mixing the polymerization initiator and at least parts of the monomers. As a result, a dissolved oxygen amount in the composition after the preparation can be reduced, and a radiation curable ink jet composition excellent in ejection stability and storage stability can be obtained. The mixture described above may be a mixture at least containing the components described above and may also be a mixture further containing at least one of other components to be contained in the radiation curable ink jet composition or a mixture containing all the components to be contained therein. The monomers to be contained in the mixture may be at least parts of the monomers to be contained in the radiation curable ink jet composition.

### 2. EXAMPLES

Hereinafter, although the present disclosure will be described in more detail with reference to Examples, the present disclosure is not limited thereto. Hereinafter, unless otherwise particularly described, "%" is represented on a mass basis.

### 2.1. PREPARATION OF RADIATION CURABLE INK JET COMPOSITION

First, after a colorant, a dispersant, and parts of polymerizable compounds were weighed and charged in a pigment dispersion tank, the mixture thus prepared was stirred with ceramic-made beads having a diameter of 1 mm, so that a pigment dispersion liquid in which the colorant was dispersed in the monomers was obtained. Next, after remaining polymerizable compounds, a polymerization initiator, a sensitizer, a surfactant, and a polymerization inhibitor were charged in a mixing tank which was a stainless steel-made container and were sufficiently dissolved by mixing and stirring, the pigment dispersion liquid obtained as described above was charged in the mixing tank and then further mixed and stirred at ordinary temperature for one hour, and filtration was then performed using a 5-µm membrane filter, so that a radiation curable ink jet composition of each of Examples and Comparative Examples was obtained. The numerical values of the components of each example in the tables represent percent by mass. Example 20 is a Reference Example.

**Table 1**

| | | | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | **EXAMPLE** 10 | EXAMPLE 11 | EXAMPLE 12 |
|---|---|---|---|---|---|---|---|---|---|---|---|---|---|---|---|
| PIGMENT DISPERSION LIQUID | | | COLORANT (CYAN PIGMENT) | 2.5 | 2.5 | 2.5 | 2.5 | 2.5 | 2.5 | 2.5 | 2.5 | 2.5 | 2.5 | 2.5 | 2.5 |
| | | | DISPERSANT | 1 | 1 | 1 | 1 | 1 | 1 | 1 | 1 | 1 | 1 | 1 | 1 |
| POLYMERIZABLE COMPOUND | MONOFUNCTIONAL MONOMER (BASE MONOMER) | | IBXA | 6 | 6 | 6 | 6 | 6 | 6 | 6 | 6 | 6 | 6 | 6 | 6 |
| | | | PEA | | | | | | | | | | | | |
| | POLYFUNCTIONAL MONOMER | DI/TRIFUNCTION | M-920 (GLYCERIN DI/TRIACRYLATE) | 20 | 15 | 10 | | 30 | 20 | 50 | 30 | 10 | 10 | 10 | 10 |
| | | TRIFUNCTION | M-930 (GLYCERIN TRIACRYLATE) | 20 | 15 | 10 | 20 | 20 | 30 | 10 | 30 | 35 | 35 | 35 | 35 |
| | | | TRIMETHYLOLPROPANE TRIACRYLATE | | | 10 | 10 | | | | | | | | |
| | | | PENTAERYTHRITOL TRI/TETRAACRYLATE | | 10 | 10 | | | | | | | | | |
| | | DIFUNCTION | DPGDA | | | | 10 | | | | | 2.8 | 2.8 | 2.8 | 2.8 |
| | | | TPGDA | | | | 10 | | | | | | | | |
| | | | VEEA | 30 | 30 | 30 | 30 | 11 | 11 | 6 | 6 | 5 | 5 | 5 | 5 |
| | MONOFUNCTIONAL MONOMER | | IBXA | 5.8 | 5.8 | 5.8 | 5.8 | 15.8 | 15.8 | 10.8 | 10.8 | 23 | | | 13 |
| | | | THFA | | | | | | | | | | 23 | | |
| | | | CTFA | | | | | | | | | | | 23 | 10 |
| | | | VMOX | | | | | | | | | | | | |
| | OLIGOMER DIFUNCTION | | CN9893 | 1 | 1 | 1 | 1 | | | | | 1 | 1 | 1 | 1 |
| POLYMERIZATION INITIATOR | | | Omnirad 819 | 5 | 5 | 5 | 5 | 5 | 5 | 5 | 5 | 5 | 5 | 5 | 5 |
| | | | Omnirad TPO-L | 5 | 5 | 5 | 5 | 5 | 5 | 5 | | 5 | 5 | 5 | 5 |
| | | | Omnirad TPO | | | | | | | | 5 | | | | |
| SENSITIZER | | | DETX | 3 | 3 | 3 | 3 | 3 | 3 | 3 | 3 | 3 | 3 | 3 | 3 |
| SURFACTANT | | | BYK-UV3500 | 0.52 | 0.52 | 0.52 | 0.52 | 0.52 | 0.52 | 0.52 | 0.52 | 0.52 | 0.52 | 0.52 | 0.52 |
| POLYMERIZATION INHIBITOR | | | LA-7RD | 0.03 | 0.03 | 0.03 | 0.03 | 0.03 | 0.03 | 0.03 | 0.03 | 0.03 | 0.03 | 0.03 | 0.03 |
| | | | MEHQ | 0.15 | 0.15 | 0.15 | 0.15 | 0.15 | 0.15 | 0.15 | 0.15 | 0.15 | 0.15 | 0.15 | 0.15 |
| MONOFUNCTIONAL MONOMER/TOTAL MASS OF POLYMERIZABLE COMPOUND (%) | | | | 14 | 14 | 14 | 13 | 26 | 26 | 20 | 20 | 35 | 35 | 35 | 35 |
| EVALUATION | INK INITIAL VISCOSITY | | | A | B | B | A | A | A | B | B | A | A | A | A |
| | ABRASION RESISTANCE | | | A | A | A | A | A | A | A | A | A | A | A | A |
| | ADHESION | | | A | A | A | B | A | A | A | A | A | A | A | A |
| | CURING PROPERTY | | | A | A | A | A | B | B | A | A | B | B | B | B |
| | SOLUBILITY IN PREPARATION | | | A | A | A | A | A | A | A | B | A | A | A | A |

**Table 2**

| | | | | EXAMPLE 13 | EXAMPLE 14 | EXAMPLE 15 | EXAMPLE 16 | EXAMPLE 17 | EXAMPLE 18 | EXAMPLE 19 | EXAMPLE 20 | COMPARATIVE EXAMPLE 1 | COMPARATIVE EXAMPLE 2 | COMPARATIVE EXAMPLE 3 |
|---|---|---|---|---|---|---|---|---|---|---|---|---|---|---|
| PIGMENT DISPERSION LIQUID | | | COLORANT (CYAN PIGMENT) | 2.5 | 2.5 | 25 | 2.5 | 2.5 | 2.5 | 2.5 | 2.5 | 2.5 | 2.5 | 2.5 |
| | | | DISPERSANT | 1 | 1 | 1 | 1 | 1 | 1 | 1 | 1 | 1 | 1 | 1 |
| POLYMERIZABLE COMPOUND | MONOFUNCTIONAL MONOMER (BASE MONOMER) | | IBXA | 6 | 6 | 6 | 6 | 6 | 6 | 6 | 6 | | | |
| | | | PEA | | | | | | | | | 6 | 6 | 6 |
| | POLYFUNCTIONAL MONOMER | DI/TRIFUNCTION | M-920 (GLYCERIN DI/TRIACRYLATE) | 10 | 30 | 30 | | 45 | 25 | 40 | 20 | 5 | 5 | |
| | | TRIFUNCTION | M-930 (GLYCERIN TRIACRYLATE) | 35 | 15 | 15 | 45 | | 10 | 32 | 15 | 5 | 5 | |
| | | | TRIMETHYLOLPROPANE TRIACRYLATE | | | | | | | | | 10 | | 10 |
| | | | PENTAERYTHRITOL TRIITETRAACRYLATE | | | | | | | | | 20 | | 30 |
| | | DIFUNCTION | DPGDA | 2.8 | 2.8 | 2.8 | | | | | | | | 20 |
| | | | TPGDA | | | | | | | | | 30 | 10.9 | |
| | | | VEEA | 5 | 5 | 5 | 15 | 15 | 35 | 3.8 | | | 10 | |
| | MONOFUNCTIONAL MONOMER | | IBXA | 10 | 23 | 24 | 15.8 | 15.8 | 5.8 | | 35 | 5.9 | 30 | 15.9 |
| | | | THFA | | | | | | | | 5.8 | | 15 | |
| | | | CTFA | | | | | | | | | | | |
| | | | VMOX | 13 | | | | | | | | | | |
| | OLIGOMER DIFUNCTION | | CN9893 | 1 | 1 | 1 | 1 | 1 | 1 | 1 | 1 | 1 | 1 | 1 |
| POLYMERIZATION INITIATOR | | | Omnirad 819 | 5 | 5 | 5 | 5 | 5 | 5 | 5 | 5 | 5 | 5 | 5 |
| | | | Omnirad TPO-L | 5 | 5 | 5 | 5 | 5 | 5 | 5 | 5 | 5 | 5 | 5 |
| | | | Omnirad TPO | | | | | | | | | | | |
| SENSITIZER | | | DETX | 3 | 3 | 3 | 3 | 3 | 3 | 3 | 3 | 3 | 3 | 3 |
| SURFACTANT | | | BYK-UV3500 | 0.52 | 0.52 | 0.52 | 0.52 | 0.52 | 0.52 | 0.52 | 0.52 | 0.45 | 0.45 | 0.45 |
| POLYMERIZATION INHIBITOR | | | LA-7RD | 0.03 | 0.03 | 0.03 | 0.03 | 0.03 | 0.03 | 0.03 | 0.03 | | | |
| | | | MEHQ | 0.15 | 0.15 | 0.15 | 0.15 | 0.15 | 0.15 | 0.15 | 0.15 | 0.15 | 0.15 | 0.15 |
| MONOFUNCTIONAL MONOMER/TOTAL MASS OF POLYMERIZABLE COMPOUND (%) | | | | 35 | 35 | 36 | 26 | 26 | 14 | 7 | 57 | 14 | 62 | 26 |
| EVALUATION | INK INITIAL VISCOSITY | | | A | A | B | A | A | A | C | C | D | A | D |
| | ABRASION RESISTANCE | | | A | B | B | A | A | A | A | C | A | D | A |
| | ADHESION | | | A | A | A | B | A | A | B | B | A | A | B |
| | CURING PROPERTY | | | B | B | C | B | B | A | A | C | A | C | B |
| | SOLUBILITY IN PREPARATION | | | A | A | A | A | A | A | A | A | A | A | A |

The descriptions of Tables 1 and 2 will be further explained.
Pigment Dispersion Liquid
   Cyan pigment: Pigment Blue 15:3
   Dispersant: trade name "Solsperse36000", high molecular weight dispersant, manufactured by Lubrizol
Polymerizable Compound
   IBXA: isobornyl acrylate, manufactured by Osaka Organic Chemical Industry Ltd.
   PEA: phenoxyethyl acrylate, trade name "Biscoat#192", manufactured by Osaka Organic Chemical Industry Ltd.
   M-920: trade name "Aronix (registered trademark) M-920", glycerin diacrylate/glycerin triacrylate, manufactured by Toagosei Company, Limited
   M-930: trade name "Aronix (registered trademark) M-930", glycerin triacrylate, manufactured by Toagosei Company, Limited
   DPGDA: dipropylene glycol diacrylate, manufactured by Shin-Nakamura Chemical Co., Ltd.
   TPGDA: tripropylene glycol diacrylate, manufactured by Shin-Nakamura Chemical Co., Ltd.
   VEEA: 2-(2-vinyloxyethoxy)ethyl acrylate, manufactured by Nippon Shokubai Co., Ltd.
   THFA: tetrahydrofurfuryl acrylate, manufactured by Osaka Organic Chemical Industry Ltd.
   CTFA: cyclic trimethylolpropane formal acrylate, manufactured by Osaka Organic Chemical Industry Ltd.
   VMOX: vinyl methyl oxazolidinone, manufactured by BASF
   CN9893: difunctional aliphatic urethane oligomer, manufactured by Sartomer Polymerization Initiator
   Omnirad 819: trade name, bis(2,4,6-trimethylbenzoyl)-phenylphosphine oxide, acylphosphine oxide-based polymerization initiator, manufactured by IGM
   Omnirad TPO-L: trade name, ethyl(2,4,6-trimethylbenzoyl)phenylphosphinate, manufactured by IGM
   Omnirad TPO: trade name, (2,4,6-trimethylbenzoyl)(diphenyl)phosphine oxide, manufactured by IGM
Sensitizer
   DETX: trade name "Speedcure DETX", 2,4-diethylthioxaneten-9-one, manufactured by LAMBSON
Surfactant
   BYK-UV3500: acrylic group-containing polyether modified polydimethylsiloxane, manufactured by BYK Additives & Instruments
Polymerization Inhibitor
   LA-7RD: trade name "Adekastab LA-7RD", 4-hydroxy-2,2,6,6-tetramethylpiperidinyl-1-oxyl, manufactured by ADEKA Corporation
   MEHQ: trade name "p-Methoxyphenol" hydroquinone monomethyl ether, manufactured by Kanto Chemical Co., Inc.

### 2.2. EVALUATION METHOD

### 2.2.1. INK INITIAL VISCOSITY

A viscosity of each radiation curable ink jet composition was measured in an environment at 20°C using a rotational viscometer (trade name "Rheometer MCR-301", manufactured by Anton-Paar. The evaluation criteria are as shown below.

### Evaluation Criteria

A: viscosity of less than 6 mPa·s
B: viscosity of 6 to less than 10 mPa·s
C: viscosity of 10 to less than 15 mPa·s
D: viscosity of 15 mPa·s or more

### 2.2.2. ABRASION RESISTANCE

A micro-scratch test was performed in accordance with JIS R3255 on a cured coating film which was formed for the following adhesion evaluation. In this measurement, a load bearing was measured as the abrasion resistance using an ultra-thin scratch tester (CSR-5000, manufactured by Nanotech). While the micro-scratch test is performed with application of a load, a load at which a stylus reaches a medium surface is regarded as the load bearing. The measurement was performed under conditions in which a stylus diameter, an amplitude, and a scratch rate were set to 15 µm, 100 µm, and 10 µm/sec, respectively. The evaluation criteria are as shown below.

### Evaluation Criteria

A: 30 mN/cm² or more
B: 25 to less than 30 mN/cm²
C: 20 to less than 25 mN/cm²
D: less than 20 mN/cm²

### 2.2.3. ADHESION

Each radiation curable ink jet composition was applied on a poly(vinyl chloride) film by a bar coater to have a thickness of 10 µm and was then irradiated with ultraviolet rays to have an irradiation intensity of 200 mJ/cm² as the cumulative energy. In this case, as a light source, an LED having a peak wavelength of 395 nm was used. Subsequently, a cross cut test was performed in accordance with JIS K5600-5-6 on a coating film obtained thereby.

In more particular, squares were formed such that cutting lines were formed in the coating film with 1-mm intervals by placing a blade of a cutting tool orthogonal thereto, so that a lattice having 10 × 10 squares was prepared. After a transparent adhesive tape having a length of approximately 75 mm (width: 25 mm) was adhered to the lattice, the tape was sufficiently rubbed with fingers so that the coating film was seen through the tape. Next, within 5 minutes after the tape was adhered, the tape was surely peeled away from the coating film for 0.5 to 1.0 second at an angle of approximately 60°, and the state of the lattice was then observed by visual inspection. The evaluation criteria are as shown below.

### Evaluation Criteria

A: peeling of coating film is observed in less than 10% of lattice.
B: peeling of coating film is observed in 10% to less than 35% of lattice.
C: peeling of coating film is observed in 35% or more of lattice.

### 2.2.4. CURING PROPERTY

Based on the content of the monofunctional monomer with respect to a total mass of the polymerizable compound in each radiation curable ink jet composition, the curing property was evaluated in accordance with the following evaluation criteria.

### Evaluation Criteria

A: content of monofunctional monomer with respect to total mass of polymerizable compound is 20 percent by mass or less.
B: content of monofunctional monomer with respect to total mass of polymerizable compound is more than 20 to 35 percent by mass.
C: content of monofunctional monomer with respect to total mass of polymerizable compound is more than 35 percent by mass.

### 2.2.5. SOLUBILITY IN PREPARATION

A composition containing no pigments was prepared using the components other than the colorant and the dispersant in a manner similar to that of each of the above Examples and Comparative Examples and was then sufficiently stirred, so that each radiation curable ink jet composition was prepared. Subsequently, whether an undissolved polymerization initiator remained or not was observed by visual inspection. In addition, after a composition which had no undissolved polymerization initiator was placed in a constant temperature bath at a temperature 0°C for 24 hours and was then recovered, the temperature was returned to room temperature, and whether the polymerization initiator was precipitated or not was again observed by visual inspection. The evaluation criteria are as shown below.

### Evaluation Criteria

A: After stirring is performed at room temperature and after storage is performed at 0°C, neither undissolved remaining polymerization initiator nor precipitate thereof is observed.
B: After stirring is performed at room temperature, undissolved remaining polymerization initiator is not observed, but after storage is performed at 0°C, precipitate of polymerization initiator is observed.
C: After stirring is performed at room temperature, undissolved remaining polymerization initiator is observed.

### 2.3. EVALUATION RESULT

Evaluation results are shown in the above Tables 1 and 2.

From the evaluation results shown in the above Tables 1 and 2, it was found that according to the radiation curable ink jet composition of the present disclosure, that is, according to a radiation curable ink jet composition containing a polymerizable compound in which the polymerizable compound includes at least one selected from the group consisting of glycerin diacrylate and glycerin triacrylate at a total content of 20 percent by mass or more with respect to the total mass of the ink jet composition, the viscosity increase of the composition was suppressed, and an excellent abrasion resistance of the coating film thereof was also obtained.

On the other hand, according to the radiation curable ink jet composition of each Comparative Example which is not according to the present disclosure, the viscosity of the composition and/or the abrasion resistance of the coating film thereof was not sufficient.

From the results of Examples 15 and 20 and the result of Example 14 or the like, when the content of the monofunctional monomers with respect to the total mass of the polymerizable compound was 35 percent by mass or less, for example, the viscosity of the composition, the abrasion resistance of the coating film thereof, and the curing property of the composition were made more excellent.

As additional explanation of the results of Examples 7 and 8, when ethyl(2,4,6-trimethylbenzoyl)phenylphosphinate was contained as the polymerization initiator, the compatibility was made more excellent, and the curing property of the composition was made particularly excellent.

From the result of Example 19 and the result of Example 1 or the like, when the total content of glycerin diacrylate and glycerin triacrylate with respect to the total mass of the ink jet composition is 70 percent by mass or less, the viscosity of the composition was further decreased.

From the embodiments described above, the following conclusions are obtained.

A radiation curable ink jet composition according to one aspect of the present disclosure comprises a polymerizable compound, the polymerizable compound includes at least one selected from the group consisting of glycerin diacrylate and glycerin triacrylate, and a total content of the glycerin diacrylate and the glycerin triacrylate with respect to a total mass of the ink jet composition is 20 percent by mass or more.

According to the above aspect of the radiation curable ink jet composition, the polymerizable compound may further include a monofunctional monomer, and a content of the monofunctional monomer with respect to a total mass of the polymerizable compound may be less than 35 percent by mass.

According to any one of the aspects of the radiation curable ink jet composition, the polymerizable compound may further include at least one selected from the group consisting of isobornyl acrylate, cyclic trimethylolpropane formal acrylate, and tetrahydrofurfuryl acrylate.

According to any one of the aspects of the radiation curable ink jet composition, the radiation curable ink jet composition may further comprise as a polymerization initiator, ethyl(2,4,6-trimethylbenzoyl)phenylphosphinate.

According to any one of the aspects of the radiation curable ink jet composition, the polymerizable compound has to include a vinyl group-containing (meth)acrylate represented by the following general formula (I).

H₂C-CR¹-CO-OR²-O-CH=CH-R³ (I)

In the formula, R¹ represents a hydrogen atom or a methyl group, R² represents a divalent organic residue having 2 to 20 carbon atoms, and R³ represents a hydrogen atom or a monovalent organic residue having 1 to 11 carbon atoms.

According to any one of the aspects of the radiation curable ink jet composition, the total content of the glycerin diacrylate and the glycerin triacrylate with respect to the total mass of the ink jet composition may be 70 percent by mass or less.

## Claims

1. A radiation curable ink jet composition comprising a polymerizable compound, wherein
the polymerizable compound includes at least one selected from the group consisting of glycerin diacrylate and glycerin triacrylate;
a total content of the glycerin diacrylate and the glycerin triacrylate with respect to a total mass of the ink jet composition is 20 percent by mass or more; and
the polymerizable compound further includes a vinyl group-containing (meth)acrylate represented by the following general formula (I)
H₂C-CR¹-CO-OR²-O-CH=CH-R³ (I)
where in the formula, R¹ represents a hydrogen atom or a methyl group, R² represents a divalent organic residue having 2 to 20 carbon atoms, and R³ represents a hydrogen atom or a monovalent organic residue having 1 to 11 carbon atoms.

2. The radiation curable ink jet composition according to claim 1,
wherein the polymerizable compound further includes a monofunctional monomer, and
a content of the monofunctional monomer with respect to a total mass of the polymerizable compound is less than 35 percent by mass.

3. The radiation curable ink jet composition according to claim 1,
wherein the polymerizable compound further includes at least one selected from the group consisting of isobornyl acrylate, cyclic trimethylolpropane formal acrylate, and tetrahydrofurfuryl acrylate.

4. The radiation curable ink jet composition according to claim 1, further comprising, as a polymerization initiator, ethyl(2,4,6-trimethylbenzoyl)phenylphosphinate.

5. The radiation curable ink jet composition according to claim 1,
wherein the total content of the glycerin diacrylate and the glycerin triacrylate with respect to the total mass of the ink jet composition is 70 percent by mass or less.

## Patentansprüche

1. Strahlungshärtbare Tintenstrahlzusammensetzung, umfassend eine polymerisierbare Verbindung,
wobei
die polymerisierbare Verbindung mindestens eines, ausgewählt aus der Gruppe bestehend aus Glycerindiacrylat und Glycerintriacrylat enthält;
ein Gesamtgehalt des Glycerindiacrylats und Glycerintriacrylats in Bezug auf eine Gesamtmasse der Tintenstrahlzusammensetzung 20 Masseprozent oder mehr ist; und
die polymerisierbare Verbindung ferner ein Vinylgruppen-haltiges (Meth)acrylat enthält, dargestellt durch die folgende allgemeine Formel (I)
H₂C-CR¹-CO-OR²-O-CH=CH-R³ (I)
wo in der Formel R¹ ein Wasserstoffatom oder eine Methylgruppe darstellt, R² einen zweiwertigen organischen Rest mit 2 bis 20 Kohlenstoffatomen darstellt und R³ ein Wasserstoffatom oder einen einwertigen organischen Rest mit 1 bis 11 Kohlenstoffatomen darstellt.

2. Strahlungshärtbare Tintenstrahlzusammensetzung nach Anspruch 1,
wobei die polymerisierbare Verbindung ferner ein monofunktionelles Monomer enthält und
ein Gehalt des monofunktionellen Monomers in Bezug auf eine Gesamtmasse der polymerisierbaren Verbindung weniger als 35 Masseprozent ist.

3. Strahlungshärtbare Tintenstrahlzusammensetzung nach Anspruch 1,
wobei die polymerisierbare Verbindung ferner mindestens eines, ausgewählt aus der Gruppe bestehend aus Isobornylacrylat, cyclischem Trimethylolpropan-Formalacrylat und Tetrahydrofurylacrylat enthält.

4. Strahlungshärtbare Tintenstrahlzusammensetzung nach Anspruch 1, ferner umfassend, als einen Polymerisationsinitiator, Ethyl(2,4,6-Trimethylbenzoyl)phenylphosphinat.

5. Strahlungshärtbare Tintenstrahlzusammensetzung nach Anspruch 1,
wobei der Gesamtgehalt des Glycerindiacrylats und Glycerintriacrylats in Bezug auf die Gesamtmasse der Tintenstrahlzusammensetzung 70 Masseprozent oder weniger ist.

## Revendications

1. Composition pour jet d'encre durcissable par rayonnement, comprenant un composé polymérisable, dans laquelle
le composé polymérisable inclut au moins un élément sélectionné à partir du groupe comprenant le diacrylate de glycérol et le triacrylate de glycérol ;
la teneur totale en diacrylate de glycérol et en triacrylate de glycérol par rapport à une masse totale de la composition pour jet d'encre est de 20 % en masse ou plus ; et
le composé polymérisable inclut en outre un (méth)acrylate contenant un groupe vinyle, représenté par la formule générale (I) suivante :
H₂C-CR¹-CO-O-R²-O-CH=CH-R³ (I)
dans laquelle, dans la formule, R¹ représente un atome d'hydrogène ou un groupe méthyle, R² représente un résidu organique divalent comportant de 2 à 20 atomes de carbone, et R³ représente un atome d'hydrogène ou un résidu organique monovalent comportant de 1 à 11 atomes de carbone.

2. Composition pour jet d'encre durcissable par rayonnement selon la revendication 1,
dans laquelle le composé polymérisable inclut en outre un monomère monofonctionnel, et
une teneur en monomère monofonctionnel par rapport à la masse totale du composé polymérisable est inférieure à 35 % en masse.

3. Composition pour jet d'encre durcissable par rayonnement selon la revendication 1,
dans laquelle le composé polymérisable inclut en outre au moins un élément sélectionné à partir du groupe comprenant l'acrylate d'isobornyle, l'acrylate de formyle de triméthylolpropane cyclique et l'acrylate de tétrahydrofurfuryle.

4. Composition pour jet d'encre durcissable par rayonnement selon la revendication 1, comprenant en outre, en tant qu'initiateur de polymérisation, du phénylphosphinate d'éthyle (2,4,6-triméthylbenzole).

5. Composition pour jet d'encre durcissable par rayonnement selon la revendication 1,
dans laquelle la teneur totale en diacrylate de glycérol et en triacrylate de glycérol par rapport à la masse totale de la composition pour jet d'encre de 70 % en masse ou moins.
